# EUROPEAN PATENT APPLICATION

(11) **EP 3 626 368 A1**
(43) Date of publication of application: **25.03.2020**
(21) Application number: 18195494.2
(22) Date of filing: 19.09.2018
(51) Int. Cl.: B22F 3/105, B29C 64/245

(54) **SUPPORT FRAME STRUCTURE FOR SUPPORTING AT LEAST ONE FUNCTIONAL COMPONENT OF AN ADDITIVE MANUFACTURING APPARATUS**

(71) Applicant: Concept Laser GmbH, 96215 Lichtenfels (DE)
(72) Inventor: Kremer, Viktor, 96215 Lichtenfels (DE)
(74) Representative: Hafner & Kohl Patent- und Rechtsanwälte Partnerschaft mbB

(57) **Abstract**

Support frame structure (11) for supporting at least one functional component of an additive manufacturing apparatus (1), the support frame structure (11) comprising:
a first support frame (12) comprising at least one support frame element (12a - 12d);
at least one second support frame (13) comprising at least one support frame element (13a - 13d), the second support frame (13) being configured to support at least one functional component of the or an additive manufacturing apparatus (1) the support frame structure (11) is assigned to, the second support frame (13) being connected with the first support frame (12) in a defined operating orientation and/or operating position;
at least one compensation element (17) configured to compensate for, particularly process-induced, thermal expansion effects of the first and/or second support frame (12, 13).

## Description

The invention relates to a support frame structure for supporting at least one functional component of an additive manufacturing apparatus, the support frame structure comprising a first support frame comprising at least one support frame element and at least one second support frame comprising at least one support frame element, the second support frame being configured to support at least one functional component of the or an additive manufacturing apparatus the support frame structure is assigned to, the second support frame being connected with the first support frame in a defined operating orientation and/or operating position.

Respective support frame structures for supporting one or more functional components of an additive manufacturing apparatus are generally known from the technological field of additive manufacturing.

Respective support frame structures are typically subject to thermal expansion effects caused by thermal energy generated during the additive manufacturing process, i.e. during operation of a respective additive manufacturing apparatus a respective support frame structure is assigned to. Respective thermal expansion effects may result in a change of the orientation and/or position of the second support frame of a respective support frame structure with respect to its defined operating orientation and/or operating position.

Respective changes of the orientation and/or position of a respective second support frame with respect to its defined operating orientation and/or operating position should be generally avoided since these may compromise the orientation and/or position of a respective functional component supported by the second support frame which functional component may require defined orientating and positioning. Thus, respective changes of the orientation and/or position should be particularly avoided for second support frames supporting a functional component, e.g. an optical component of a beam deflection device of an irradiation device of the additive manufacturing apparatus, which requires highly exact orientating and positioning.

Hence, there exists a need for further developed support frame structures which avoid or reduce respective changes of the orientation and/or position of a respective second support frame with respect to its defined operating orientation and/or operating position.

It is the object of the invention to provide a further developed support frame structure for supporting at least one functional component of an additive manufacturing apparatus which particularly, avoids or reduces respective changes of the orientation and/or position of a respective second support frame with respect to its defined operating orientation and/or operating position.

This object is achieved by a support frame structure according to Claim 1. The claims depending on Claim 1 relate to possible embodiments of the support frame structure according to Claim 1.

The support frame structure described herein is a support frame structure for supporting at least one functional component of an apparatus for additively manufacturing at least one three-dimensional object ("additive manufacturing apparatus"). The support frame structure described herein is thus, configured to support at least one functional component of an additive manufacturing apparatus. As will be apparent from below, a respective functional component may particularly, be built as or comprise an optical component of a beam deflection device, such as a scanning device, of an irradiation device of a respective additive manufacturing apparatus.

The support frame structure comprises a first support frame and at least one second or further support frame.

The first support frame comprises one or more support frame elements. The support frame elements of the first support frame are typically arranged in a defined spatial arrangement relative to each other. The arrangement, shape, and size of the support frame element(s) of the first support frame typically depends on the concrete constructive design of the first support frame. Generally, all kinds of arrangements, shapes, and sizes of support frame elements are conceivable in view of a concrete constructive design of the first support frame. Merely as an example, a support frame element may have a, particularly bar- or rod-like, longitudinal shape or a plate- or wall-like shape. Yet, more complex three-dimensional shapes of a respective support frame element, e.g. at least partly bent or curved shapes, are conceivable as well. The support frame element(s) of the first support frame may also be built as or comprise support struts or webs, respectively. In either case, the support frame element(s) of the first support frame may build a framework. The support frame element(s) of the first support frame is/are typically made of a metal having a specific coefficient of thermal expansion (CTE). As an example, the support frame elements may be made of a metal having CTE in the range of 9 x 10⁻⁶ K⁻¹ - 13 x 10⁻⁶ K⁻¹.·As such, the support frame element(s) of the first support frame may be made of steel, for instance.

The second support frame also comprises one or more support frame elements. The support frame elements of the second support frame are typically arranged in a defined spatial arrangement relative to each other. The arrangement, shape, and size of the support frame element(s) of the second support frame typically depends on the concrete constructive design of the second support frame. Generally, all kinds of arrangements, shapes, and sizes of support frame elements are conceivable in view of a concrete constructive design of the second support frame. Merely as an example, a support frame element may have a, particularly bar- or rod-like, longitudinal shape or a plate- or wall-like shape. Yet, more complex three-dimensional shapes of a respective support frame element, e.g. at least partly bent or curved shapes, are conceivable as well. The support frame element(s) of the second support frame may also be built as or comprise support struts or webs, respectively. In either case, the support frame elements of the second support frame may build a framework. The support frame element(s) is/are typically made of a metal having a specific coefficient of thermal expansion. As an example, the support frame element(s) of the second support frame may be made of a metal having a CTE in the range of 9 x 10⁻⁶ K⁻¹ - 13 x 10⁻⁶ K⁻¹. As such, the support frame element(s) of the second support frame may be made of steel, for instance.

The second support frame is connectable or connected to the first support frame in a defined operating orientation and/or operating position. Thus, at least with respect to the second support frame the first support frame may be deemed or denoted as a superordinate support frame of the support frame structure. The first support frame may be built as a machine housing frame of the additive manufacturing apparatus the support frame structure is assigned to, for instance.

The defined operating orientation and/or operating position of the second support frame may be related with a defined orientation and/or position of the second support frame relative to the first support frame and/or relative to a reference plane, e.g. the build plane of the additive manufacturing apparatus the support frame structure is assigned to. The defined operating orientation and/or operating position of the second support frame may particularly be related with a defined distance between the second support frame or a functional component supported by the second support frame relative to a reference plane, e.g. the build plane of the additive manufacturing apparatus the support frame structure is assigned to.

The second support frame may comprise at least one, e.g. mechanical, connection interface for directly or indirectly connecting the second support frame to the first support frame. Likewise, the first support frame may comprise at least one connection interface for directly or indirectly connecting the first support frame to the second support frame. The second support frame may be particularly, connected to a top wall of a part of the first support frame. The second support frame, i.e. at least a bottom support frame element of the second support frame, may be arranged on a freely exposed portion of a top wall of a process chamber of the or an additive manufacturing apparatus the support frame structure is assigned to.

At least the second support frame is configured to support at least one functional component of the or an additive manufacturing apparatus the support frame structure is assigned to. The second support frame may thus, comprise at least one, e.g. mechanical, support interface for supporting at least one functional component of a respective additive manufacturing apparatus. A respective support interface may be built as or comprise a, particularly compartment-like, receiving section for receiving at least one functional component of a respective additive manufacturing apparatus. A respective, particularly compartment-like, receiving section may be designed with respective to a respective functional component which is to be received therein. Hence, the shape and size of a respective receiving section may be at least partly, particularly entirely, adapted to the shape and size of a respective functional component which is to be received therein. A respective, particularly compartment-like, receiving section may be integrally formed with the second support frame. A respective, particularly compartment-like, receiving section may be spatially delimited by walls of the second support frame.

As indicated above, the second support frame may be particularly, configured to support or supports at least one optical component, e.g. a lens of a lens arrangement, of a beam deflection device, such as a scanning device, of an additive manufacturing apparatus the support frame structure is assigned to. Respective optical components typically require a highly exact orientating and/or positioning, particularly relative to the build plane of the or an additive manufacturing apparatus the support frame structure is assigned to.

The first support frame may also be configured to support at least one functional component of the or an additive manufacturing apparatus the support frame structure is assigned to. The above annotations regarding the second support frame may apply to the first support frame in analogous manner.

In either case, the term "support" may comprise a, particularly detachable, attachment of a respective functional component to a respective support frame.

The support frame structure comprises at least one compensation element configured to compensate for, particularly process-induced, thermal expansion effects of the first and/or second support frame, particularly so as to maintain the second support frame in the defined operating orientation and/or operating position. The term "maintain" may also embrace reorienting or re-positioning the second support frame from an orientation and/or a position which is not the defined operating orientation and/or operating position to the defined operating orientation and/or operating position, i.e. re-establishing the defined operating orientation and/or operating position of the second support frame. The compensation element thus, allows for avoiding or at least reducing, particularly process-induced, changes of the orientation and/or position of the second support frame with respect to its defined operating orientation and/or operating position. As will be more apparent from below, the compensation element is particularly configured to actively compensate for, particularly process-induced, thermal expansion effects of the first and/or second support frame, particularly so as to maintain the second support frame in the defined operating orientation and/or operating position.

The or a respective compensation element may be built as or may comprise a connection element configured to connect the second support frame with the first support frame and thus, configured to interconnect the first and second support frame. A respective compensation element may thus, be built as a component separate to the first and/or second support frame. A respective connection element may be interposed between the first support frame and the second support frame. A respective connection element may comprise at least one connection interface for connecting the connection element to the first and/or second support frame. A respective connection element may have a longitudinal basic shape. A respective connection element may be built as or comprise a connection strut or web, for instance.

The or a respective compensation element may also be built as or comprise a support frame element of the second support frame. A respective compensation element may thus, be built as a component (directly) integrated in the second support frame. A respective compensation element typically differs from other support frame elements of the second support frame in its coefficient of thermal expansion. As will be more apparent from below, a respective compensation element typically has a higher coefficient of thermal expansion than the other support frame elements of the second support frame.

As will be more apparent from below, the compensation of respective thermal expansion effects of the first and/or second support frame, particularly so as to maintain the second support frame in the defined operating orientation and/or operating position, by a respective compensation element is particularly based on a specific change of the dimensions, i.e. particularly the longitudinal dimensions, of the respective compensation element. A respective compensation element may thus, have a capability to change its dimensions in order to compensate for respective thermal expansion effects of the first and/or second support frame, particularly so as to maintain the second support frame in the defined operating orientation and/or operating position. A respective compensation element may thus, be configured to change the orientation, i.e. particularly the angular position, and/or the vertical position of the second support frame relative to the build plane or any other reference plane. The orientation, i.e. particularly the angular position, of the second support frame can also be changed relative to the first support frame or at least one support frame element of the first support frame, respectively. Changes of the orientation may thus, be particularly required for compensating of tilting of the second support frame, which may e.g. originate from tilting of the first support frame or at least one support frame element of the first support frame, respectively, relative to the build plane or any other reference plane. In this regard, a multi-point support, particularly a three-point support, of the second support frame can be advisable. Hence, the second support frame can be supported by a multi-point support, particularly a three-point support.

The change of the dimensions of a respective compensation element may be thermally induced. A respective compensation element may thus, be built of a material or a material structure, respectively which is configured to undergo a thermally induced change of its dimensions. As will be more apparent from below, a respective material or material structure may be a metal or metal structure having a relatively high coefficient of thermal expansion, for instance. In other words, a respective compensation element may have the capability to change its dimensions based on its temperature. The temperature of a respective compensation element is thus, correlated with its dimensions. Higher temperatures of a respective compensation element may result in increased dimensions of the compensation element with respect to specific reference dimensions of the compensation element and lower temperatures of a respective compensation element may result in decreased dimensions of the compensation element with respect to specific reference dimensions of the compensation element. Yet, it is also conceivable that higher temperatures of a respective compensation element may result in decreased dimensions of the compensation element with respect to specific reference dimensions of the compensation element and that lower temperatures of a respective compensation element may result in increased dimensions of the compensation element with respect to specific reference dimensions of the compensation element.

The or a respective compensation element may have a higher coefficient of thermal expansion at least than the first support frame. A respective compensation element may thus, be built of a material or a material structure having a higher coefficient of thermal expansion than the material of which at least the first support frame is built. The compensation element may have a coefficient of thermal expansion above 13 x 10⁻⁶ K⁻¹, particularly above 20 x 10⁻⁶ K⁻¹, for instance. As mentioned above, the first support frame may have a coefficient of thermal expansion in the range of 9 x 10⁻⁶ K⁻¹ to 13 x 10⁻⁶ K⁻¹. The same applies to the second support frame. A respective compensation element may be built of a metal or metal structure having a relatively high coefficient of thermal expansion (CTE), for instance. Such a metal - the term "metal" also covers metal alloys - may be aluminum, magnesium, brass, for instance. Generally, any other metal having a coefficient of thermal expansion above 13 x 10⁻⁶ K⁻¹, particularly above 20 x 10⁻⁶ K⁻¹ is conceivable. Likewise, other materials than metals, e.g. plastics, particularly thermoplastic or thermosetting polymers, having a respective coefficient of thermal expansion are conceivable.

The or a respective compensation element may comprise a tempering structure configured to, particularly actively, temper the compensation element to a defined compensation temperature at which the compensation element allows for a compensation of thermal expansion effects of the first and/or second support frame, particularly so as to maintain the second support frame in the defined operating orientation and/or operating position. Hence, the temperature of a respective compensation element may be actively changed, i.e. increased or decreased, by means of a respective tempering structure. As indicated above, changing the temperature of the compensation element results in changing the dimensions of the compensation element so as to compensate for thermal expansion effects of the first and/or second support frame, particularly so as to maintain the second support frame in the defined operating orientation and/or operating position.

The or a respective tempering structure may be built as or comprises a tempering channel structure at least partially extending at and/or in a respective compensation element in at least one spatial direction, for instance. A respective tempering channel structure may define at least one tempering channel at least partially extending at and/or in the compensation element through which a tempering medium may stream. A respective tempering channel may extend in helix- or meander-like manner, for instance.

A respective tempering medium streaming through a respective tempering channel may be a gas or a liquid, for instance. A respective tempering medium may particularly, be a process medium, e.g. a process has and/or a process liquid, of the additive manufacturing apparatus the support frame structure is assigned to. A respective process medium may be a medium for actively tempering, i.e. cooling or heating, of a functional component of the or an additive manufacturing apparatus the support frame structure is assigned to. A respective tempering structure of the or an additive manufacturing apparatus the support frame structure is assigned to is typically configured to temper tempering a functional component of the additive manufacturing apparatus. A respective tempering channel structure or tempering channel, respectively of the support frame structure may thus, be in fluid communication with a tempering structure of the or an additive manufacturing apparatus the support frame structure is assigned to. The tempering cannel structure of or channel, respectively may thus, form part of a superordinate tempering structure of the or an additive manufacturing apparatus the support frame structure is assigned to.

A respective tempering channel may have a and/or extend in a straight and/or curved shape. Generally, the shape of a respective tempering channel may be adapted to the shape of the compensation element.

The or a respective compensation element may be an additively manufactured component. Hence, a respective compensation element may generally have (almost) any geometrically defined or non-defined shape. The same applies to the tempering channel structure and a respective tempering channel thereof, respectively.

Other embodiments of a respective tempering structure are other types of cooling and/or heating devices such as electric or electronic cooling and/or heating devices. Respective cooling and/or heating devices may comprise electrical heating elements, such as heating wires, for instance.

The or at least one compensation element may also be built as or may comprise at least one (longitudinally) extendable actuator. A respective actuator can thus, be transferred in a first state in which it has a first longitudinal extension and in at least one further state in which it has a further longitudinal extension different to the first longitudinal extension. A respective actuator can be built as or comprise at least one mechanical, electromechanical, particularly piezoelectrical, pneumatic, or hydraulic actuator element.

The support frame structure may comprise a hardware- and/or software-embodied determination unit configured to determine thermal expansion effects of the first and/or second support frame. A respective determination unit may comprise at least one determination element configured to qualitatively and/or quantitatively determine thermal expansion effects of the first and/or second support frame or at least one respective support frame element thereof. A respective determination element may be generally provided with, i.e. attached to, the first support frame and/or with the second support frame or at least one respective support frame element thereof. A respective determination element may particularly, be provided with the first support frame, e.g. provided with a support frame element of the first support frame, so as to determine thermally induced changes of the dimensions of the support frame element which may result in changes of the orientation and/or position of the second support frame with respect to its defined operating orientation and/or operating position. A respective determination element may be built as or may comprise at least one strain gauge element, for instance.

The support frame structure may further comprise a hardware- and/or software-embodied control unit configured to actively control temperature and/or the thermal expansion of the or a respective compensation element, particularly so as to maintain the second support frame in the defined operating orientation and/or operating position. A respective control unit may thus, be particularly configured to actively and dynamically control the temperature of a respective compensation element as to actively control the dimensions of the compensation element so as to actively compensate for thermal expansion effects of the first and/or second support frame. A respective control unit may thus, be in communication with a respective tempering structure being configured to, particularly actively, temper the compensation element to a defined compensation temperature at which the compensation element allows for a (required) compensation of thermal expansion effects of the first and/or second support frame, particularly so as to maintain the second support frame in the defined operating orientation and/or operating position.

The or a respective determination unit may thus, be configured to generate an information indicating thermal expansion effects of the first and/or second support frame and the or a respective control unit may be configured to actively control thermal expansion of the compensation element, particularly so as to maintain the second support frame in the defined operating orientation and/or operating position, on basis of the information generated by the determination unit. A respective determination unit and a respective control unit may thus, be communicatively coupled via a communication line so as to communicate a respective information from the determination unit to the control unit and to control thermal expansion of the compensation element, particularly so as to maintain the second support frame in the defined operating orientation and/or operating position, on basis of the information.

The invention further relates to a compensation element for a support frame structure as described herein. The compensation element is configured to compensate for, particularly process-induced, thermal expansion effects of a first and/or second support frame of a respective support frame structure the compensation element is assigned to. All annotations concerning the support frame structure also apply to the compensation element.

The invention further relates to an additive manufacturing apparatus comprising at least one support frame structure as described herein. All annotations concerning the support frame structure also apply to the additive manufacturing apparatus.

The additive manufacturing apparatus may be configured to additively manufacture at least one three-dimensional object by means of successive layerwise selective consolidation of layers of build material, e.g. a polymer or metal powder. The additive manufacturing apparatus may particularly, be configured to additively manufacture at least one three-dimensional object by means of successive layerwise selective irradiation and consolidation of layers of build material by means of at least one energy beam. A respective energy beam may be an electron beam or a laser beam, for instance. The apparatus can thus, be embodied as a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The additive manufacturing apparatus comprises a number of functional components which are operable or operated during its operation. Each functional component may comprise a number of functional sub-components. Exemplary functional components are a build material application device which is configured to apply an amount of build material which is to be selectively consolidated in the build plane of the additive manufacturing apparatus; an irradiation device which is configured to selectively irradiate and thereby, consolidate areas of a layer of build material with at least one energy beam, the irradiation device comprising at least one optical component, the optical component may form part of a beam deflection device, such as a scanning device, of the irradiation device; a stream generating device configured to generate a process gas stream being capable of being charged with particles generated during selective consolidation of respective layers of build material while streaming across the build plane, whereby the process gas stream is adapted to remove or transport respective particles from a layer of build material which are generated during selective consolidation of the respective layer of build material, and a control device for controlling operation of respective devices of the additive manufacturing apparatus.

The invention further relates to a method of compensating for, particularly process-induced, thermal expansion effects of a first and/or second support frame of a support frame structure of an additive manufacturing apparatus, wherein at least one compensation element as described herein is used for compensating the, particularly process-induced, thermal expansion effects of the first and/or second support frame of the support frame structure of the additive manufacturing apparatus, particularly so as to maintain the second support frame in the defined operating orientation and/or operating position. The method may particularly, comprise the step of actively and/or dynamically controlling the thermal expansion of the compensation element so as to maintain the second support frame in a defined operating orientation and/or operating position. The method may be implemented by means of the support frame structure and/or the additive manufacturing apparatus described herein. All annotations concerning the support frame structure and/or the additive manufacturing apparatus also apply to the method.

Exemplary embodiments of the invention are described with reference to the Fig., whereby:
- Fig. 1: shows a principle drawing of an additive manufacturing apparatus according to an exemplary embodiment;
- Fig. 2 - 8: each show a principle drawing of a support frame structure according to an exemplary embodiment;
- Fig. 9, 10: each show a principle drawing of a support frame structure according to an exemplary embodiment.

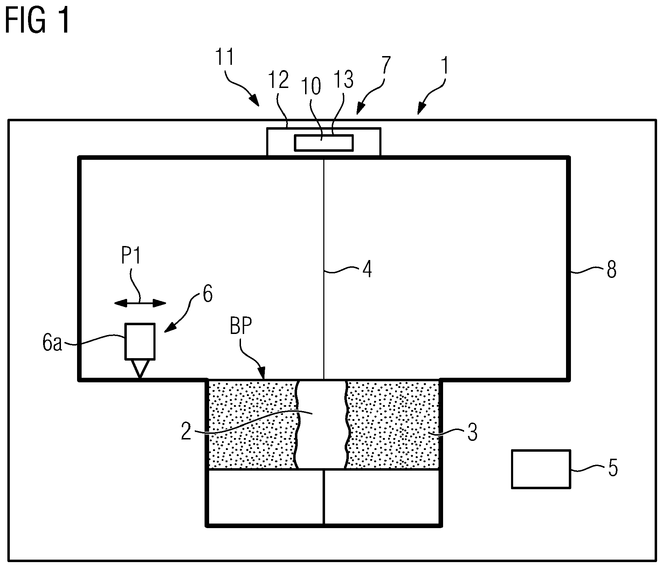

Fig. 1 shows a principle drawing of an exemplary embodiment of an additive manufacturing apparatus 1, i.e. an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4 according to an exemplary embodiment. The energy beam 4 may be an electron beam or a laser beam, for instance. The apparatus 1 may be embodied as a selective electron beam melting apparatus or as a selective laser melting apparatus, for instance. Yet, the apparatus 1 could also be embodied as a binder jetting apparatus, particularly a metal binder jetting apparatus.

The apparatus 1 comprises a number of functional components which are operable and operated during its operation. Each functional component may comprise a number of functional sub-components. Operation of the functional components and the apparatus 1, respectively is controlled by a hard- and/or software embodied (central) control device 5.

Exemplary functional components of the apparatus 1 are a build material application device 6 and an irradiation device 7.

The build material application device 6 is configured to apply an amount of build material 3 in the build plane BP of the apparatus 1 so as to generate respective layers of build material 3 which are to be selectively irradiated and consolidated during additively manufacturing a three-dimensional object 2 by means of the apparatus 1. The build material application device 6 may be embodied as a re-coating device, for instance. The build material application device 6 comprises a build material application element 6a that is moveably supported within the process chamber 7 of the apparatus 1; the build material application element 6a may be moved across the build plane BP of the apparatus 1 so as to apply an amount of dosed build material 3 in the build plane BP of the apparatus 1 and generate a respective layer of build material 3 which is to be selectively irradiated and consolidated during additively manufacturing a three-dimensional object 2 by means of the apparatus 1. An exemplary motion of the build material application element 6a is indicated by arrow P1, which may represent an exemplary build material application direction of the build material application element 6a.

The irradiation device 7 is configured to selectively irradiate and thereby, consolidate respective layers of build material 3 which have been applied in the build plane BP of the apparatus 1 by the build material application device 6 with at least one energy beam 4. The irradiation device 7 may comprise a beam generating device (not shown) configured to generate at least one energy beam 4 and a beam deflection device 10, e.g. a scanning device, configured to deflect an energy beam 4 to diverse positions within the build plane BP of the apparatus 1.

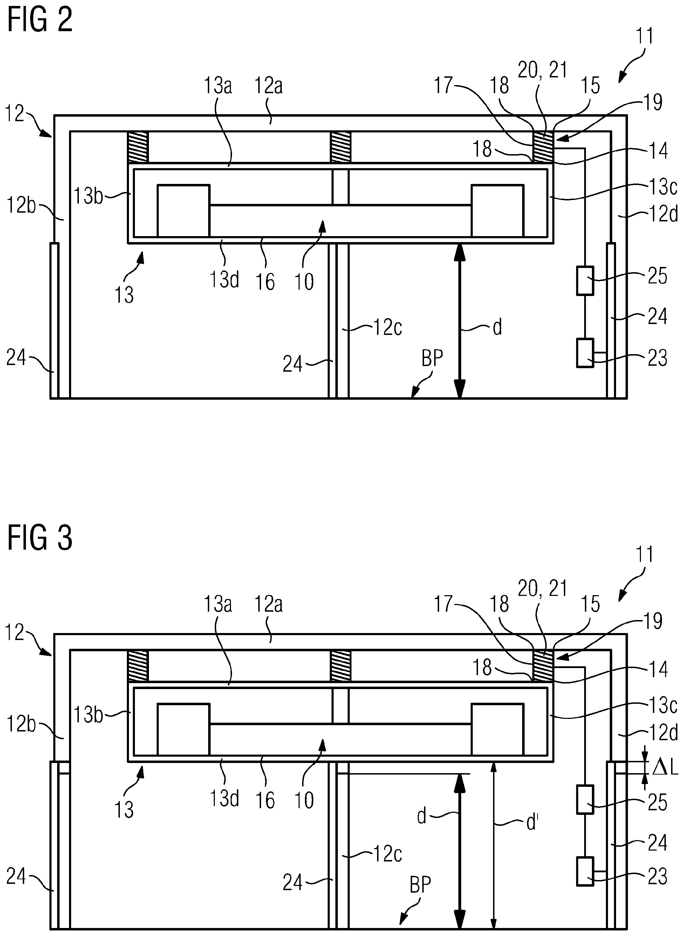

The beam deflection device 10 - the beam deflecting device 10 being a representative example of a functional component of the apparatus 1 - is supported by a support frame structure 11 which will be explained in more detail with respect to Fig. 2-10.

Fig. 2 - 10 each show a principle drawing of a respective support frame structure 11 of the apparatus 1 according to an exemplary embodiment in a frontal view.

The support frame structure 11 is configured to support at least one functional component - in the exemplary embodiments of the Fig. the beam deflection device 10 or an optical component such as one or more lenses of a lens arrangement of the beam deflection device 10 - of the apparatus 1.

The support frame structure 11 comprises a first support frame 12 and a second or further support frame 13.

The first support frame 12 comprises one or more support frame elements 12a - 12d arranged in a defined spatial arrangement relative to each other. The arrangement, shape, and size of the support frame elements 12a - 12d typically depends on the concrete constructive design of the first support frame 12. Merely as an example, the support frame elements 12a - 12d may have a, particularly bar- or rod-like, longitudinal shape or a plate- or wall-like shape. The support frame elements 12a - 12d may also be built as or comprise support struts or webs, respectively. In either case, the support frame elements 12a - 12d may build a framework. The support frame elements 12a - 12d are typically made of a metal having a specific coefficient of thermal expansion (CTE). As an example, the support frame elements 12a - 12d may be made of a metal having CTE in the range of 9 x 10⁻⁶ K⁻¹ - 13 x 10⁻⁶ K⁻¹.·As such, the support frame elements 12a - 12d may be made of steel, for instance.

The second support frame 13 comprises one or more support frame elements 13a - 13d arranged in a defined spatial arrangement relative to each other. The arrangement, shape, and size of the support frame elements 13a - 13d typically depends on the concrete constructive design of the second support frame 13. Merely as an example, the support frame elements 13a - 13d may have a, particularly bar- or rod-like, longitudinal shape or a plate- or wall-like shape. The support frame elements 13a - 13d may also be built as or comprise support struts or webs, respectively. In either case, the support frame elements 13a - 13d may build a framework. The support frame elements 13a - 13d are typically made of a metal having a specific coefficient of thermal expansion (CTE). As an example, the support frame elements 13a - 13d may be made of a metal having CTE in the range of 9 x 10⁻⁶ K⁻¹ - 13 x 10⁻⁶ K⁻¹.·As such, the support frame elements 13a - 13d may be made of steel, for instance.

As is apparent from Fig. 2, the second support frame 13 is configured to support the beam deflection device 10 of the apparatus 1. The second support frame 13 typically comprises a, e.g. mechanical, support interface 16 for supporting the beam deflection device 10 of the apparatus 1. The support interface 16 may be built as or comprise a, particularly compartment-like, receiving section (not shown) for receiving the beam deflection device 10 of the apparatus 1.

As is also apparent from the Fig. 2, the second support frame 13 is connectable or connected to the first support frame 13 in a defined operating orientation and/or operating position. Thus, at least with respect to the second support frame 13 the first support frame 12 may be deemed or denoted as a superordinate support frame of the support frame structure 11. The first support frame 12 may be built as a machine housing frame of the apparatus 1.

The defined operating orientation and/or operating position of the second support frame 13 shown in Fig. 2 and is related with a defined orientation and/or position of the second support frame 13 relative to the first support frame 11 and/or relative to a reference plane, e.g. the build plane BP of the apparatus 1. The defined operating orientation and/or operating position of the second support frame 13 is particularly related with a defined distance d between the second support frame 13 and the beam deflection device 10 supported by the second support frame 13 relative to a reference plane, e.g. the build plane BP of the apparatus 1. According to the exemplary embodiments of the Fig., the distance d exemplarily relates to the (vertical) distance between the bottom support frame element 13d and the upper surface of the build plane BP of the apparatus 1.

The second support frame 13 typically comprises a number of, e.g. mechanical, connection interfaces 14 for connecting the second support frame 13 to the first support frame 12. Likewise, the first support frame 12 typically comprises a number of connection interfaces 15 for connecting the first support frame 12 to the second support frame 13. As is apparent from the Fig., the second support frame 13 may be connected with a top support frame element 12a forming a top wall of the first support frame 12.

The support frame structure 11 comprises at least one compensation element 17, i.e. a number of compensation elements 17 in the exemplary embodiments of the Fig., configured to compensate for, particularly process-induced, thermal expansion effects of the first and/or second support frame 12, 13 so as to maintain the second support frame 13 in the defined operating orientation and/or operating position. The compensation elements 17 thus, allow for avoiding or at least reducing, particularly process-induced, changes of the orientation and/or position of the second support frame 13 with respect to its defined operating orientation and/or operating position.

A respective compensation element 17 is built as a connection element configured to connect the second support frame 13 with the first support frame 12 and thus, configured to interconnect the first and second support frame 12, 13 in the exemplary embodiments of the Fig. As such, a respective connection element 17 is interposed between the first support frame and the second support frame 12, 13 in the exemplary embodiments of the Fig. A respective connection element may comprise connection interfaces 18 for connecting the connection element to the first and/or second support frame 12, 13.

Even though not depicted in the Fig. a respective compensation element 17 could also be built as a support frame element 13a - 13d of the second support frame 13. A respective compensation element 13 could thus, be built as a component (directly) integrated in the second support frame 13. A respective compensation element 17 typically differs from other support frame elements 13a - 13d of the second support frame 13 in its coefficient of thermal expansion.

The compensation of respective thermal expansion effects of the first and/or second support frame 12, 13 so as to maintain the second support frame 13 in the defined operating orientation and/or operating position, by a respective compensation element 17 is particularly based on a specific change of the dimensions, i.e. particularly the longitudinal dimensions, of the compensation element 17. A respective compensation element 17 thus, has a capability to change its dimensions in order to compensate for respective thermal expansion effects of the first and/or second support frame 12, 13 so as to maintain the second support frame 13 in the defined operating orientation and/or operating position.

The change of the dimensions of a respective compensation element 17 may be thermally induced. A respective compensation element 17 may thus, be built of a material or a material structure, respectively which is configured to undergo a thermally induced change of its dimensions. A respective material or material structure may be a metal or metal structure having a relatively high coefficient of thermal expansion. In other words, a respective compensation element 17 may have the capability to change its dimensions based on its temperature. The temperature of a respective compensation element 17 is thus, correlated with its dimensions.

The compensation element 17 typically has a higher coefficient of thermal expansion at least than the first support frame 12. A respective compensation element 17 is thus, built of a material or a material structure, e.g. a metal or a metal structure, having a higher coefficient of thermal expansion than the material of which at least the first support frame 12 is built. The compensation element 17 may have a coefficient of thermal expansion above 13 x 10⁻⁶ K⁻¹, particularly above 20 x 10⁻⁶ K⁻¹, for instance. As mentioned above, the first support frame 12 may have a coefficient of thermal expansion in the range of 9 x 10⁻⁶ K⁻¹ to 13 x 10⁻⁶ K⁻¹. The same applies to the second support frame 13. As an example, a respective compensation element 17 may be built of aluminum, magnesium, brass, for instance.

A respective compensation element 17 may comprise a tempering structure 19 configured to, particularly actively, temper the compensation element 17 to a defined compensation temperature at which the compensation element 17 allows for a compensation of thermal expansion effects of the first and/or second support frame 12, 13 so as to maintain the second support frame 13 in the defined operating orientation and/or operating position. Hence, the temperature of a respective compensation element 17 may be actively changed, i.e. increased or decreased, by means of a respective tempering structure 19. As indicated above, changing the temperature of the compensation element 17 results in changing the dimensions of the compensation element 17 so as to compensate for thermal expansion effects of the first and/or second support frame 12, 13 so as to maintain the second support frame 13 in the defined operating orientation and/or operating position.

A respective tempering structure 19 may be built as a tempering channel structure 20 at least partially extending at and/or in a respective compensation element 17 in at least one spatial direction in the exemplary embodiments of the Fig. A respective tempering channel structure 20 may define at least one tempering channel 21 at least partially extending at and/or in the compensation element 17 through which a tempering medium may stream. A respective tempering channel 21 may extend in helix- or meander-like manner, for instance.

A respective tempering medium streaming through a respective tempering channel may be a gas or a liquid, for instance. A respective tempering medium may particularly, be a process medium, e.g. a process has and/or a process liquid, of the apparatus 1. A respective process medium may be a medium for actively tempering, i.e. cooling or heating, of a functional component, i.e. particularly the beam deflection device 10, of the apparatus 1. A respective tempering channel structure 20 or tempering channel 21, respectively of the support frame structure 11 may thus, be in fluid communication with a tempering structure of the apparatus 1. The tempering channel structure 20 or tempering channel 21, respectively may thus, form part of a superordinate tempering structure of the apparatus 1.

A respective compensation element 17 may be an additively manufactured component. Hence, a respective compensation element 17 may generally have (almost) any geometrically defined or non-defined shape. The same applies to the tempering channel structure 20 and a respective tempering channel 21 thereof, respectively.

The support frame structure 11 may comprise a hardware- and/or software-embodied determination unit 23 configured to determine thermal expansion effects of the first support frame 12. A respective determination unit 23 comprises a number of determination elements 24, e.g. strain gauges, configured to qualitatively and/or quantitatively determine thermal expansion effects of the first support frame 12 or at least one respective support frame 12a - 12d element thereof. As such, a respective determination element 24 may be attached to respective support frame elements 12a - 12d of the first support frame 12. A respective determination element 24 may particularly, be attached to a support frame element 12a - 12d of the first support frame 12 so as to determine thermally induced changes of the dimensions of the support frame element 12a -12d which may result in changes of the orientation and/or position of the second support frame 13 with respect to its defined operating orientation and/or operating position. Additionally or alternatively, the second support frame 13 could also be provided with respective determination elements 24.

The support frame structure 11 may further comprise a hardware- and/or software-embodied control unit 25 configured to actively control temperature and/or the thermal expansion of respective compensation elements 17 so as to maintain the second support frame 13 in the defined operating orientation and/or operating position. A respective control unit 25 may thus, be particularly configured to actively and dynamically control the temperature of a respective compensation element 17 as to actively control the dimensions of the compensation element 17 so as to actively compensate for thermal expansion effects of the first and/or second support frame 12, 13. A respective control unit may thus, be in communication with a respective tempering structure 19 being configured to, particularly actively, temper a respective compensation element 17 to a defined compensation temperature at which the compensation element 17 allows for a (required) compensation of thermal expansion effects of the first and/or second support frame 12, 13 so as to maintain the second support frame 13 in the defined operating orientation and/or operating position.

The determination unit 23 may thus, be configured to generate an information indicating thermal expansion effects of the first and/or second support frame 12, 13 and the control unit 25 may be configured to actively and individually control thermal expansion of respective compensation elements 17 so as to maintain the second support frame 13 in the defined operating orientation and/or operating position, on basis of the information generated by the determination unit 23. The determination unit 23 and the control unit 25 may thus, be communicatively coupled via a communication line so as to communicate a respective information from the determination unit 23 to the control unit 25 and to actively and individually control thermal expansion of the compensation elements 17 so as to maintain the second support frame 12 in the defined operating orientation and/or operating position, on basis of the information.

In the following, the operating principle of the compensation elements 17 will be explained with respect to the Fig. 2 - 8 in brief manner:
As mentioned above, Fig. 2 shows the second support frame 13 in its defined operating orientation and/or operating position. In the defined operating orientation and/or operating position, there is a distance d between the second support frame 13 and the beam deflection device 10 supported by the second support frame 13 relative to a reference plane, e.g. the build plane BP of the apparatus 1. The distance d exemplarily relates to the (vertical) distance between the bottom support frame element 13d and the upper surface of the build plane BP of the apparatus 1.

Fig. 3 shows a state in which the first support frame 12 underwent a (positive) thermal expansion ΔL due to an increase of temperature relative to a reference temperature. The increase of temperature may be based on process-induced, i.e. occurs during operation of the apparatus 1. As is clear from Fig. 3, the actual distance between the bottom support frame element 13d and the upper surface of the build plane BP of the apparatus 1 is no longer distance d, i.e. the distance relating to the defined operational orientation and/or operational position of the second support frame 13, but distance d' which is increased with respect to distance d.

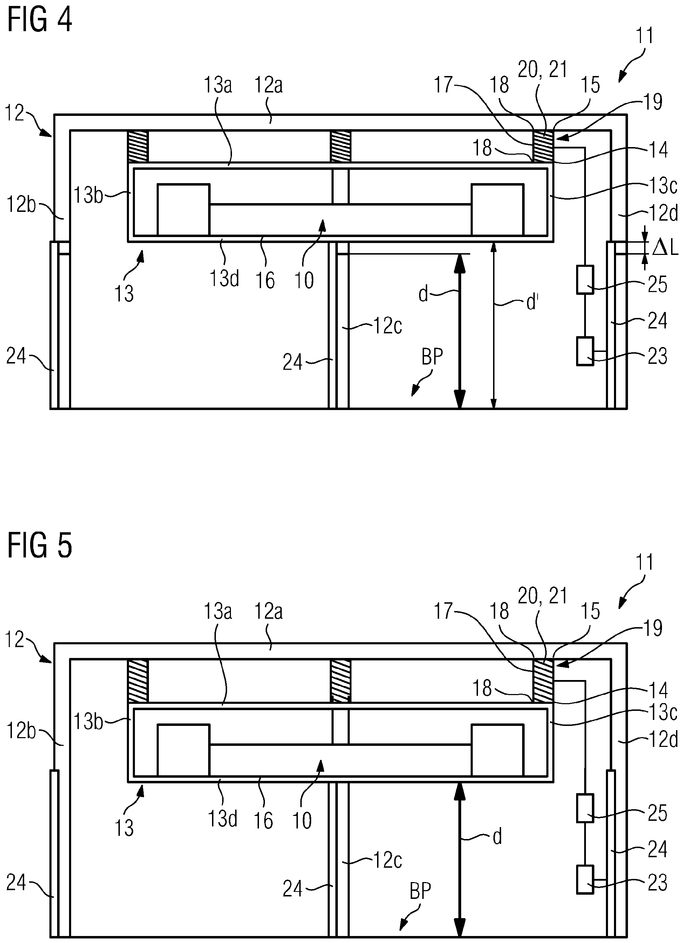

Fig. 4 shows a state in which the temperature of the compensation elements 17 and the related dimensions of the compensation elements 17 is being actively controlled on basis of an information provided by the determination unit 23. Active control of the temperature of the compensation elements 17 comprises heating of the compensation elements 17 resulting in an increase of the longitudinal dimensions of the compensation elements 17. Active control of the temperature of the compensation elements 17 results in a specific change of the dimensions of the compensation elements 17, i.e. an extension in longitudinal direction, so as to compensate for the thermal expansion effects of the first support frame 12 so as to maintain the second support frame 12 in the defined operating orientation and/or operating position.

Fig. 5 shows the state in which, due to the active change of the temperature of the compensation elements 17 and the related adaption/change of the dimensions of the compensation elements 17, the defined operating orientation and/or operating position of the second support frame 13 is re-established.

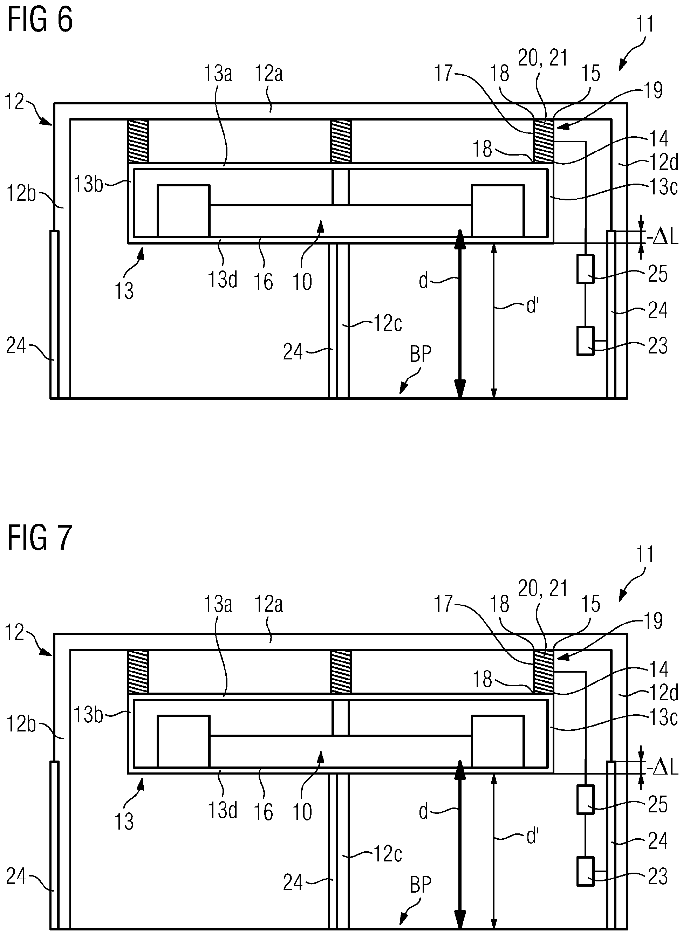

Fig. 6 shows a state in which the first support frame 12 underwent a (negative) thermal expansion -ΔL due to a decrease of temperature relative to a reference temperature. The decrease of temperature may occur during operation of the apparatus 1. As is clear from Fig. 6, the actual distance between the bottom support frame element 13d and the upper surface of the build plane BP of the apparatus 1 is no longer distance d, i.e. the distance relating to the defined operational orientation and/or operational position of the second support frame 13, but distance d' which is decreased with respect to distance d.

Fig. 7 shows a state in which the temperature of the compensation elements 17 and the related dimensions of the compensation elements 17 is being actively controlled on basis of an information provided by the determination unit 23. Active control of the temperature of the compensation elements 17 comprises cooling of the compensation elements 17 resulting in a decrease of the longitudinal dimensions of the compensation elements 17. Active control of the temperature of the compensation elements 17 results in a specific change of the dimensions of the compensation elements 17, i.e. a contraction in longitudinal direction, so as to compensate for the thermal expansion effects of the first support frame 12 so as to maintain the second support frame 12 in the defined operating orientation and/or operating position.

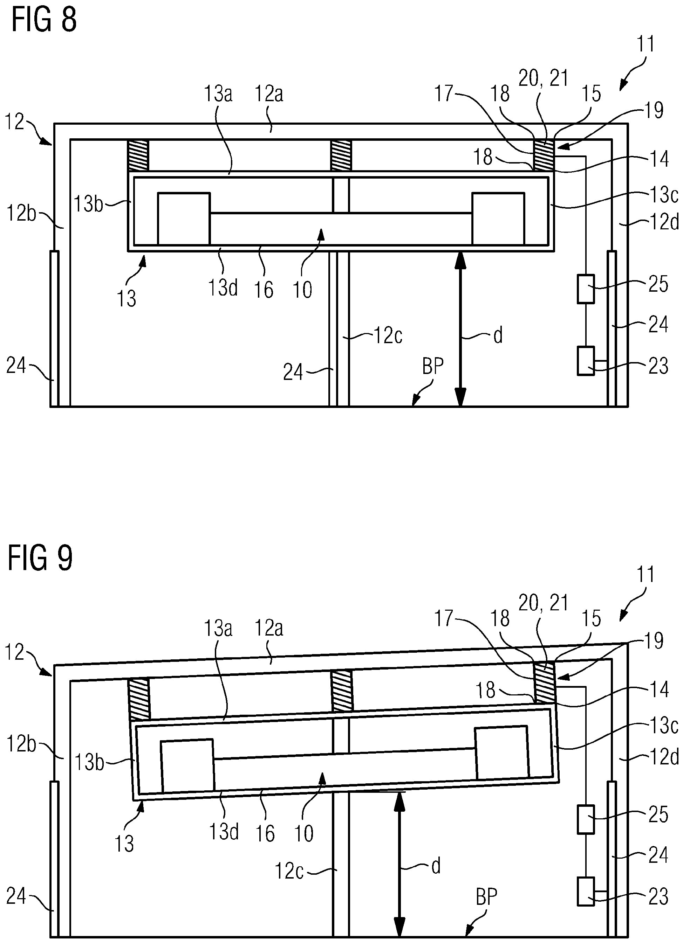

Fig. 8 shows the state in which, due to the active change of the temperature of the compensation elements 17 and the related adaption/change of the dimensions of the compensation elements 17, the defined operating orientation and/or operating position of the second support frame 13 is re-established.

Fig. 9 exemplarily shows a state in which the second support frame 13 has an orientation, i.e. particularly an angular position, different from its defined operation orientation. This orientation of the second support frame 13 may originate from tilting of at least one support frame element 12a of the first support frame 12. Changes of the orientation of the second support frame 13 may thus, be particularly required for compensating of tilting of the second support frame 13 relative to the build plane BP or any other reference plane and for tilting of at least one support frame element 12a of the first support frame 12.

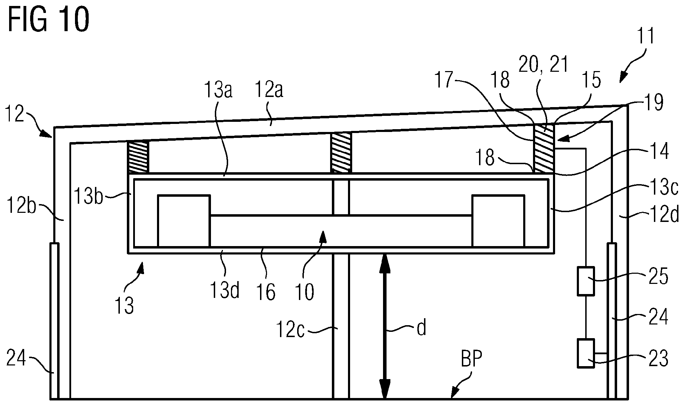

Fig. 10 shows a state in which the second support frame 13 is brought back to its defined operating orientation by respective changes of the longitudinal extension of the compensation elements 17, i.e. by an extension of the right compensation element 17 and a contraction of the left compensation element 17 in the exemplary embodiment of Fig. 9, 10. Fig. 10 thus, shows that a respective compensation element 17 can be configured to change the orientation, i.e. particularly the angular position, of the second support frame 17 relative to the build plane BP or any other reference plane and relative to at least one support frame element 12a of the first support frame 12, respectively.

With regard to all embodiments of the Fig., the or at least one compensation element 17 may also be built as or may comprise at least one (longitudinally) extendable actuator. A respective actuator can be transferred in a first state in which it has a first longitudinal extension and in at least one further state in which it has a further longitudinal extension different to the first longitudinal extension. A respective actuator can be built as or comprise at least one mechanical, electromechanical, particularly piezoelectrical, pneumatic, or hydraulic actuator element.

The embodiments of the Fig. allow for implementing a method of compensating for, particularly process-induced, thermal expansion effects of a first and/or second support frame 12, 13 of a support frame structure 11 of an additive manufacturing apparatus 1, wherein at least one compensation element 17 as described herein is used for compensating the, particularly process-induced, thermal expansion effects of the first and/or second support frame 12, 13 of the support frame structure 11 of the apparatus 1 so as to maintain the second support frame 13 in the defined operating orientation and/or operating position. The method may particularly, comprise the step of actively and/or dynamically controlling the thermal expansion of a respective compensation element 17 so as to maintain the second support frame 13 in a defined operating orientation and/or operating position.

All exemplary embodiment may be readily combined with each other.

## Claims

1. Support frame structure (11) for supporting at least one functional component of an additive manufacturing apparatus (1), the support frame structure (11) comprising:
a first support frame (12) comprising at least one support frame element (12a - 12d); at least one second support frame (13) comprising at least one support frame element (13a - 13d), the second support frame (13) being configured to support at least one functional component of the or an additive manufacturing apparatus (1) the support frame structure (11) is assigned to, the second support frame (13) being connected with the first support frame (12) in a defined operating orientation and/or operating position;
at least one compensation element (17) configured to compensate for, particularly process-induced, thermal expansion effects of the first and/or second support frame (12, 13), particularly so as to maintain the second support frame (13) in the defined operating orientation and/or operating position.

2. Support frame structure according to Claim 1, **wherein** the compensation element (17) is built as or comprises a connection element configured to connect the second support frame (13) with the first support frame (12).

3. Support frame structure according to Claim 1 or 2, **wherein** the compensation element (17) is built as or comprises a support frame element (13a - 13d) of the second support frame (13).

4. Support frame structure according to any of the preceding Claims, **wherein** the compensation element (17) has a higher coefficient of thermal expansion at least than the first support frame (12).

5. Support frame structure according to any of the preceding Claims, **wherein** the compensation element (17) comprises a tempering structure (19) configured to, particularly actively, temper the compensation element (17) to a defined compensation temperature at which the compensation element (17) allows for a compensation of thermal expansion effects of the first and/or second support frame (12, 13), particularly so as to maintain the second support frame (13) in the defined operating orientation and/or operating position.

6. Support frame structure according to Claim 5, **wherein** the tempering structure (19) is built as or comprises a tempering channel structure (20) at least partially extending at and/or in the compensation element (17), the tempering channel structure (20) defining at least one tempering channel (21) at least partially extending at and/or in the compensation element (17) through which a tempering medium may stream.

7. Support frame structure according to Claim 6, **wherein** the tempering medium is a process medium of the or an additive manufacturing apparatus (1) the support frame structure (11) is assignable or assigned to.

8. Support frame structure according to any of the preceding Claims, **wherein** the compensation element (17) is an additively manufactured component.

9. Support frame structure according to any of the preceding Claims, **further comprising** a determination unit (23) configured to determine thermal expansion effects of the first and/or second support frame (12 ,13).

10. Support frame structure according to any of the preceding Claims, **further comprising** a control unit (25) configured to actively control thermal expansion of the compensation element (17), particularly so as to maintain the second support frame (13) in the defined operating orientation and/or operating position.

11. Support frame structure according to Claims 9 and 10, **wherein** the determination unit (23) is configured to generate an information indicating thermal expansion effects of the first and/or second support frame (12, 13) and the control unit (25) is configured to actively control thermal expansion of the compensation element (17), particularly so as to maintain the second support frame (13) in the defined operating orientation and/or operating position on basis of the information.

12. Support frame structure according to any of the preceding Claims, **wherein** the compensation element (17) is built as or comprises at least one extendable actuator.

13. Support frame structure according to any of the preceding Claims, **wherein** the respective functional component (10) is built as or comprise an optical component of a beam deflection device (10), particularly a scanning device, of an irradiation device.

14. Compensation element (17) for a support frame structure (11) according to any of the preceding Claims, the compensation element (17) being configured to compensate for, particularly process-induced, thermal expansion effects of a first and/or second support frame (12, 13) of a respective support frame structure (11).

15. Additive manufacturing apparatus (1) for additively manufacturing at least one three-dimensional object (2) by means of successive layerwise selective consolidation of layers of build material (3), the apparatus (1) comprising at least one support frame structure (11) according to any of Claims 1 - 13.

16. Method of compensating for, particularly process-induced, thermal expansion effects of a first and/or second support frame (12, 13) of a support frame structure (11) of an additive manufacturing apparatus (1), wherein at least one compensation element (17) according to Claim 14 is used for compensating the, particularly process-induced, thermal expansion effects of the first and/or second support frame (12, 13) of the support frame structure (11) of the additive manufacturing apparatus (1).
